# EUROPÄISCHE PATENTSCHRIFT

(11) **EP 2 907 189 B1**
(45) Veröffentlichungstag und Bekanntmachung des Hinweises auf die Patenterteilung: **18.04.2018**
(21) Anmeldenummer: 13798561.0
(22) Anmeldetag: 09.10.2013
(51) Int. Cl.: H01M 10/0567, H01M 10/0568, H01M 10/052

(54) **ADDITIVE FÜR GALVANISCHE ZELLEN**
ADDITIVES FOR GALVANIC CELLS
ADDITIFS POUR CELLULES GALVANIQUES

(30) Priorität: 11.10.2012 DE 102012218496
(43) Veröffentlichungstag der Anmeldung: 19.08.2015
(73) Patentinhaber: Albemarle Germany GmbH, 65926 Frankfurt am Main (DE)
(72) Erfinder: WIETELMANN, Ulrich, 61381 Friedrichsdorf (DE); HARTNIG, Christoph, 65817 Eppstein (DE); EMMEL, Ute, 65929 Frankfurt am Main (DE)
(74) Vertreter: Rottmayer, Hans
(86) Internationale Anmeldenummer: PCT/EP2013/003026
(87) Internationale Veröffentlichungsnummer: WO 2014/060077

(56) Entgegenhaltungen:
- EP-A1- 2 571 089
- JP-A- 2009 054 354
- JP-A- 2010 118 179
- US-A1- 2005 202 320
- BESSLER E ET AL: "BORKOMPLEXE MIT DICARBONSAEUREN: BIS(OXALATO)BORATE UND BIS(MALONATO)BORATE//BORON COMPLEXES WITH DICARBOXYLIC ACIDS: BIS(OXALATO)BORATES AND BIS(MALONATO)BORATES", ZEITSCHRIFT FUER NATURFORSCHUNG, TEIL B: ANORGANISCHE CHEMIE,ORGANISCHE CHEMIE, TUEBINGEN, Bd. 37B, Nr. 8, 1. Januar 1982 (1982-01-01), Seiten 1020-1025, XP001070694,

## Beschreibung

Gegenstand der Erfindung sind Additive für galvanische Zellen.

Mobile elektronische Geräte benötigen zur unabhängigen Stromversorgung immer leistungsfähigere wiederaufladbare Batterien. Neben Nickel/Cadmium- und Nickel/Metallhydrid-Akkumulatoren sind für diese Zwecke insbesondere Lithiumbatterien geeignet, die im Vergleich zu den erstgenannten Systemen eine deutlich höhere Energiedichte aufweisen. Zukünftig sollen großformatige Lithiumakkumulatoren auch z.B. für stationäre Anwendungen (power back-up) sowie im Automobilbereich für Traktionszwecke (Hybridantriebe oder reinelektrischen Antrieb) eingesetzt werden. Zur Zeit werden für diesen Zweck Lithiumionenbatterien entwickelt und verwendet, bei denen als Anode ein graphithaltiger Stoff eingesetzt wird. Graphitanoden können im geladenen Zustand im allgemeinen nicht mehr als 1 Lithium pro 6 Kohlenstoffatome entsprechend einer Grenzstöchiometrie LiC₆ einlagern (interkalieren). Daraus ergibt sich eine Lithiumdichte von maximal 8,8 Gew.-%. Deshalb bewirkt das Anodenmaterial eine unerwünschte Begrenzung der Energiedichte solcher Batteriesysteme.

Anstelle von Lithium-Interkalationsanoden wie Graphit kann prinzipiell auch Lithiummetall oder eine Lithiummetall-haltige Legierung (z.B. Legierungen des Lithiums mit Aluminium, Silizium, Zinn, Titan oder Antimon) als Anodenmaterial verwendet werden. Dieses Prinzip würde im Vergleich zur gängigen Graphitinterkalationsanode eine deutlich höhere spezifische Lithiumbeladung und damit Energiedichte erlauben. Leider weisen solche Lithiummetall-haltigen Systeme ungünstige Sicherheitseigenschaften und eine mangelnde Zyklenstabilität auf. Dies hängt vor allem damit zusammen, dass sich das Lithium bei der Abscheidung im Ladezyklus nicht planar, sondern dendritisch abscheidet, d.h. es bilden sich an der Anodenoberfläche nadelförmige Auswachsungen. Dieses dendritisch aufgewachsene Lithium kann den elektrischen Kontakt mit der Anode verlieren, wodurch es elektrochemisch inaktiviert wird, d.h. es kann nicht mehr zur Kapazität der Anode beitragen, d.h. die Lade-/Entladekapazität nimmt ab. Weiterhin können dendritenförmige Lithiumformen den Separator durchstoßen, wodurch es zum elektrischen Kurzschluß der Batterie kommen kann. Die dabei kurzfristig freigesetze Energie bewirkt eine drastische Temperaturerhöhung, wodurch sich die in der Regel brennbaren gängigen Elektrolytlösungen, welche organische Lösungsmittel wie Kohlensäureester (z.B. Ethylencarbonat, Propylencarbonat, Ethylmethylcarbonat), Lactone (z.B. γ-Butyrolacton) oder Ether (z.B. Dimethoxyethan) enthalten, entzünden können. Da gegenwärtige Lithiumbatterien ein labiles fluorhaltiges Leitsalz (LiPF₆ oder LiBF₄) enthalten, bilden sich bei solchen Ereignissen zudem gefährliche, ätzende und toxische Zersetzungsprodukte (Fluorwasserstoff und flüchtige fluorhaltige organische Produkte). Aus diesen Gründen werden lithiummetallhaltige wiederaufladbare Batterien bisher nur in Mikrobauweise (z.B. Knopfzellen) hergestellt.

Von Pacific Northwest National Laboratories wurden Additive vorgeschlagen, die die Bildung von Lithiumdendriten unterdrücken können (Ji-Guang Zhang, 6th US-China EV and Battery Technology Workshop, Aug. 23, 2012). Diese Additive bestehen aus CsPF₆ oder RbPF₆. Es ist bekannt, dass die genannten Hexafluorophosphate in Wasser nicht stabil sind (E. Bessler, J. Weidlein, Z. Naturforsch. 37b, 1020-5 (1982). Sie zersetzen sich vielmehr gemäß

MPF₆ + H₂O → POF₃ + 2 HF + MF (M = z.B. Cs, Rb)

Die freigesetzte Flußsäure ist hochgiftig und korrosiv. Aus diesem Grund erfordert die Herstellung und Verwendung der Hexafluorophosphate höchste Sicherheitsmaßnahmen. Zudem sind bei der umweltgerechten Entsorgung oder dem Recycling von MPF₆-haltigen Batterien Maßnahmen zu treffen, die die Freisetzung von giftigen Fluorverbindungen, insbesondere HF, verhindern. Diese Maßnahmen sind aufwendig und verkomplizieren das Recycling gebrauchter Batterien.

Aus dem Dokument JP 2009054354 A sind nichtwässrige Elektrolytzusammensetzungen und diese enthaltende Sekundärbatterien bekannt. Durch die Verwendung des dort beschriebenen Elektrolyten soll die Anfangslade- und Entladeeffektivität verbessert, eine exzellente Lade- und Entladezyklen-Charakteristik erreicht und die Ausdehnung unter Hochtemperaturbedinqunqen reduziert werden. Dazu sollen dem Elektrolyt neben einem ersten Leitsalz ein zweites Leitsalz in geringerer Konzentration zugesetzt werden, dessen Metallkationen einen größeren Radius als die des ersten Leitsalzes aufweisen. Als erste Leitsalze werden die bekannten Lithiumsalze erwähnt und als zweite Leitsalze solche mit Natrium-, Kalium-, Rubidium- oder Cäsiumionen. Bevorzugt werden jedoch Kaliumsalze als zweites Leitsalz eingesetzt.

Die Erfindung hat sich die Aufgabe gestellt, Elektrolytzusätze bereit zu stellen, die die Bildung dendritischer Lithiumstrukturen bei der Abscheidung von Lithiumionen als Lithiummetall verhindern und die zudem nichttoxisch sind, d.h. insbesondere keine fluorhaltigen Giftstoffe wie HF, POF₃ usw. bilden. Diese Elektrolytzusätze müssen in den für Batterien üblichen Lösungsmitteln eine bestimmte Mindestlöslichkeit von ≥ 0,001 mol/L aufweisen

Die Aufgabe wird dadurch gelöst, dass fluorfreie, in polaren organischen Lösungsmitteln lösliche

Additive ausgewählt aus der Gruppe fluorfreier Cesium- oder Rubidiumsalze verwendet werden, wobei der Elektrolyt ein oder mehrere organische aprotische Lösungsmittel und ein oder mehrere Lithiumsalze ausgewählt aus der Gruppe Imidsalze, Methidsalze, LiClO₄, Lithiumchelatoborate, Lithiumchelatophosphate enthält sowie das Cs oder Rb-haltige Additiv in Konzentrationen zwischen 0,0001 M und 0,1M enthalten und aus der Gruppe CrSC₄O₈B), Cs(,C₆H₄O₈B), Rb(C₆H₄O₈B), Rb(C₆H₄O₈B), CsClO₄ und RbClO₄ ausgewählt ist.

Es wurde überraschend gefunden, dass die erfindungsgemäßen fluorfreien Cs- und Rb-Salze in den üblicherweise in Lithiumbatterien verwendeten organischen aprotischen Lösungsmitteln wie Kohlensäureesten, Nitrilen, Carbonsäureestern, Sulfonen, Ethern etc. relativ gut löslich sind. Dies war nicht zu erwarten, da bekannt ist, dass viele Cs-Salze mit großen, wenig koordinierenden Anionen in Wasser relativ schwerlöslich sind (A. Nadjafi, Microchim. Acta 1973, 689-96). So beträgt beispielsweise die Löslichkeit von CsClO₄ in Wasser bei 0°C 0,8 und bei 25°C 1,97 g/100 ml (Wikipedia, Caesium perchlorate). Einige selbst ermittelte Löslichkeitsdaten in batterieüblichen Lösungsmitteln sind in der folgenden Tabelle zusammengestellt:

| Salz | Lösungsmittel | Löslichkeit | |
|---|---|---|---|
| | | (Gew. %) | (mol/L) |
| CsBOB | NMP | 7,9 | 0,27 |
| CsBOB | EC/DMC (1:1) | 1,8 | 0,07 |
| CsBOB | PC | 1,5 | 0,06 |
| RbBOB | PC | 0,64 | 0,03 |
| CsBMB | NMP | 1,8 | 0,05 |
| CsClO₄ | PC | 1,3 | 0,07 |

Dabei stehen die Abkürzungen BOB für Bis-(oxalato)borat (C₄O₈B)⁻, BMB für Bis-(malonato)borat (C₆H₄O₈B)⁻, NMP für N-Methylpyrrolidon, EC für Ethylencarbonat, DMC für Dimethylcarbonat, EMC für Ethyl-Methylcarbonat und PC für Propylencarbonat.

Auch in für Lithiumbatterien gängigen Elektrolytlösungen, also in Gegenwart eines lithiumhaltigen Leitsalzes, sind die genannten Verbindungen löslich. Überraschend wurde gefunden, dass in Gegenwart des Fluorsalzes LiPF₆ die Additiv-Löslichkeiten besonders hoch sind:

| Additiv-Salz | Grundelektrolyt | Lösichkeit Additiv-Salz | |
|---|---|---|---|
| | | (Gew. %) | (mol/L) |
| CsBOB | LiBOB, 10% EC/EMC | 0,12 | 0,004 |
| CsClO₄ | LiBOB, 10% EC/EMC | 0,12 | 0,005 |
| RbBOB | LiBOB, 10% EC/EMC | 0,03 | 0,001 |
| CsBOB | LiPF₆, 10% EC/EMC | 1,2 | 0,04 |
| CsClO₄ | LiPF₆, 10% EC/EMC | 0,9 | 0,04 |
| RbBOB | LiPF₆, 10% EC/EMC | 1,2 | 0,04 |

Der Grund für diese erhöhte Löslichkeit liegt möglicherweise darin, dass es überraschenderweise bereits bei relativ niedrigen Temperaturen zu Ligandenaustauschvorgängen kommt. Nach NMR-Untersuchungen findet bereits bei 25°C innerhalb weniger Tage ein signifikanter Fluorid/Oxalat-Austausch statt, der im Falle des Einsatzes von CsBOB wie folgt formuliert werden kann:

Cs(C₂O₄)₂ + LiPFₑ ⇔ CsBF₄ + Li[F₂P(C₂O₄)₂]

Es wurde gefunden, dass Elektrolytlösungen, die die genannten fluorfreien Additive in Konzentrationen zwischen 0,0001 M und 0,1 M, bevorzugt 0,001 und 0,05 M enthalten, die Bildung von Lithiumdendriten in galvanischen Zellen mit Anoden, die im geladenen Zustand Lithium- oder Lithiumlegierungen enthalten oder daraus bestehen, verhindern können. Das erfindungsgemäße Additiv wird bevorzugt in Lithiumbatterien vom Typ Lithium/Schwefel, Lithium/Luft oder mit lithiumfreien oder - armen Kathoden vom Typ Konversions- oder Insertions-Kathoden eingesetzt.

Als Elektrolyte kommen die dem Fachmann geläufigen Arten (Flüssig-, Gel-, Polymer- und Festelektrolyte) in Frage. Als Leitsalz werden die in solchen Produkten löslichen oder sonst wie einbringbaren Lithiumsalze mit schwach koordinierenden, oxidationsstabilen Anionen verwendet. Dazu gehören beispielsweise LiPF₆, Lithiumfluoroalkylphosphate, LiBF₄, Imidsalze (z.B. LiN(SO₂CF₃)₂), LiOSO₂CF₃, Methidsalze (z.B. LiC(SO₂CF₃)₃), LiClO₄, Lithiumchelatoborate (z.B. LiBOB, LiB(C₂O₄)₂), Lithiumfluorochelatoborate (z.B. LiC₂O₄BF₂), Lithiumchelatophosphate (z.B. LiTOP, LiP(C₂O₄)₃) und Lithiumfluorochelatophosphate (z.B. Li(C₂O₄)₂PF₂). Von diesen Lithiumleitsalzen sind die fluorfreien Vertreter besonders bevorzugt, da durch Verwendung von Fluor die in Bezug auf Toxizität und einfache Handhabung gegebenen Vorteile völlig fluorfreier Elektrolyte verlorengehen.

Die Elektrolyte enthalten ein Lithiumleitsalz oder eine Kombination mehrerer Leitsalze in Konzentrationen zwischen min. 0,1 und max. 2,5 mol/kg, bevorzugt 0,2 bis 1,5 mol/kg. Flüssige oder gelförmige Elektrolyte enthalten zudem organische, aprotische Lösungsmittel, zumeist Kohlensäureester (z.B. Ethylencarbonat, Dimethylcarbonat, Diethylcarbonat, Fluorethylencarbonat, Propylencarbonat), Nitrile (Acetonitril, Adiponitril, Valeronitril, Methoxypropionitril, Succinonitril), Carbonsäureester (z.B. Ethylacetat, Butylpropionat), Sulfone (z.B. Dimethylsulfon, Diethylsulfon, Ethylmethoxyethylsulfon), Lactone (z.B. γ-Butyrolacton) und/oder Ether (z.B. Tetrahydrofuran, Tetrahydropyran, Dibutylether, 1,2-Dimethoxyethan, Diethylenglykoldimethylether, Tetraethylenglykoldimethylether, 1,4-Dioxan, 1,3-Dioxolan).

Im Folgenden wird die erfindungsgemäßen Verbindungen und deren Herstellung allgemein beschrieben.

### Beispiele

### 1. Herstellung von Cäsium bis(oxalato)borat (CsBOB)

In einem 1 L-Rundkolben aus Glas wurden 38,67 g Borsäure und 10,8 g Oxalsäure Dihydrat in 121 g Wasser suspendiert. Unter magnetischem Rühren wurden 102,9 g Cäsiumcarbonat portionsweise zugegeben (starkes Schäumen infolge CO₂-Entwicklung). Nach Beendigung der Zugabe wurde die weiße Suspension an einem Rotationsverdampfer zunächst bei 100°C und 400 mbar eingedampft. Der farblose feste Rückstand wurde dann gemahlen und bei 180°C und 20 mbar 3 h endgetrocknet.
Ausbeute: 197,3 g farbloses Pulver (97% d. Th.)
Cs-Gehalt: 41,0%
δ¹¹B = 7,4 ppm (Lösung in d₆dmso)
Thermische Stabilität: 290°C (Beginn der thermischen Zersetzung im Thermogravimetrieexperiment unter Ar-Strom)

### 2. Herstellung einer CsBOB-haltigen fluorfreien Elektrolytlösung

In einer Ar-gefüllten Handschuhbox wurden 10 g einer 11 Gew%igen LiBOB-Lösung in Ethylencarbonat/Ethylmethylcarbonat (1:1, wt/wt) mit 0,32 g CsBOB versetzt und 24 h magnetisch gerührt. Dann wurde die Suspension durch Membranfiltration (0,45 µm PTFE) klar filtriert.
Cs-Gehalt (FES) in der Elektrolytlösung: 0,05 Gew.%

### 3. Herstellung einer CsClO₄-haltigen Elektrolytlösung

In einer Ar-gefüllten Handschuhbox wurden 10 g einer 10 Gew%igen LiPF₆-Lösung in Ethylencarbonat/Ethylmethylcarbonat (1:1, wt/wt) mit 0,47 g CsClO₄ versetzt und 24 h magnetisch gerührt. Dann wurde die Suspension durch Membranfiltration (0,45 µm PTFE) klar filtriert.
Cs-Gehalt (FES) in der Elektrolytlösung: 0,07 Gew.%

## Patentansprüche

1. Elektrolyt, der neben einem ersten Leitsalz ein zweites Leitsalz in geringerer Konzentration enthält, dessen Metallkationen einen größeren Radius als die des ersten Leitsalzes aufweisen, für ein galvanisches Element, welches eine Anode aufweist, die im geladenen Zustand Lithiummetall oder Lithiumlegierungen enthält oder daraus besteht, wobei er ein oder mehrere Additive ausgewählt aus der Gruppe fluorfreier Cesium- oder Rubidiumsalze enthält, wobei der Elektrolyt eines oder mehrere organische aprotische Lösungsmittel und ein oder mehrere Lithiumsalze ausgewählt aus der Gruppe Imidsalze, Methidsalze, LiClO₄, Lithiumchelatoborate, Lithiumchelatophosphate enthält und das Lithiumsalz fluorfrei ist sowie das Cs oder Rb-haltige Additiv in Konzentrationen zwischen 0,0001 M und 0,1 M enthalten ist, **dadurch gekennzeichnet, dass** das Cs oder Rb-haltige Additiv aus der Gruppe Cs(C₄O₈B), Cs(C₆H₄O₈B), Rb(C₄O₈B), Rb(C₆H₄O₈B), CsClO₄ und RbClO₄ ausgewählt ist.

2. Elektrolyt nach Anspruch 1 , **dadurch gekennzeichnet, dass** das Cs oder Rb-haltige Additiv in Konzentrationen zwischen 0,001 und 0,05 M enthalten ist.

## Claims

1. An electrolyte, containing, in addition to a first conducting salt, a second conducting salt at a lower concentration, the metal cations of which have a larger radius than those of the first conducting salt, for a galvanic element having an anode which contains or consists of lithium metal or lithium alloys in the charged state, wherein it contains one or more additives selected from the group of fluorine-free cesium or rubidium salts, wherein the electrolyte contains of one or more organic aprotic solvents and one or more lithium salts selected from the group of imide salts, methide salts, LiClO₄, lithium chelatoborates, lithium chelatophosphates and the lithium salt is fluorine-free and the Cs- or Rb-containing additive is present in concentrations between 0.0001 M and 0.1 M, **characterized in that** the Cs- or Rb-containing additive is selected from the group of Cs(C₄O₈B), Cs(C₆H₄O₈B), Rb(C₄O₈B), Rb(C₆H₄O₈B), CsClO₄ and RbClO₄.

2. The electrolyte according to claim 1, **characterized in that** the Cs- or Rb-containing additive is contained in concentrations between 0.001 and 0.05 M.

## Revendications

1. Électrolyte qui contient outre un premier sel conducteur un second sel conducteur dans une concentration plus faible, dont les cations métalliques présentent un rayon supérieur à celui du premier sel conducteur, pour un élément galvanique qui présente une anode qui contient à l'état chargé du lithium métallique ou des alliages de lithium ou s'en compose, dans lequel il contient un ou plusieurs additifs sélectionnés dans le groupe de sels de césium ou de rubidium exempt de fluor, dans lequel l'électrolyte contient un ou plusieurs solvants aprotiques organiques et un ou plusieurs sels de lithium sélectionnés dans le groupe des sels d'imide, sels de méthide, LiClO₄, chélatoborate de lithium, chélatophosphate de lithium et le sel de lithium est exempt de fluor ainsi que l'additif contenant du Cs ou Rb est contenu dans des concentrations entre 0,0001 M et 0,1 M, **caractérisé en ce que** l'additif contenant du Cs ou Rb est sélectionné dans le groupe Cs(C₄O₈B), Cs(C₆H₄O₈B), Rb(C₄O₈B), Rb(C₆H₄O₈B), CsClO₄ et RbClO₄.

2. Électrolyte selon la revendication 1, **caractérisé en ce que** l'additif contenant du Cs ou Rb est contenu dans des concentrations entre 0,001 et 0,05 M.
